Europäisches Patentamt

(19) European Patent Office

Office européen des brevets

(11) Numéro de publication: **0 093 028**
**B1**

(12) FASCICULE DE BREVET EUROPEEN

(45) Date de publication du fascicule du brevet:
25.06.86

(21) Numéro de dépôt: **83400610.8**

(22) Date de dépôt: **23.03.83**

(51) Int. Cl.⁴: **F 02 B 71/04,** F 02 B 23/02

(54) Générateur à combustion interne à pistons libres.

(30) Priorité: **23.04.82 FR 8207057**

(43) Date de publication de la demande:
**02.11.83 Bulletin 83/44**

(45) Mention de la délivrance du brevet:
**25.06.86 Bulletin 86/26**

(84) Etats contractants désignés:
**DE GB IT**

(56) Documents cités:
**DE - A - 1 929 803**
**FR - A - 1 228 290**
**FR - A - 2 016 171**
**FR - A - 2 381 917**
**GB - A - 1 151 700**
**US - A - 3 924 580**
**US - A - 4 020 804**

(73) Titulaire: **AUTOMOBILES PEUGEOT, 75, avenue de la
Grande Armée, F-75116 Paris (FR)**
Titulaire: **AUTOMOBILES CITROEN, 62 Boulevard
Victor-Hugo, F-92200 Neuilly-sur-Seine (FR)**

(72) Inventeur: **Carnus, Jean-Claude, 4 ter, Rue du
Cherche-Midi, F-75006 Paris (FR)**

(74) Mandataire: **Moncheny, Michel et al, c/o Cabinet
Lavoix 2 Place d'Estienne d'Orves, F-75441 Paris
Cedex 09 (FR)**

ACTORUM AG

## Description

L'invention se rapporte aux générateurs à combustion interne à deux pistons libres opposés dans un même cylindre au milieu duquel débouche soit un injecteur de carburant, soit une préchambre de combustion et de turbulence, par un orifice situé entre les deux pistons dans leur position, dite de point mort intérieur, où ils sont le plus rapprochés.

Pour qu'un générateur à combustion interne possède un haut rendement, on sait qu'il doit avoir un taux de compression élevé, et par suite une chambre de combustion de faible volume minimal, et qu'il est avantageux que les gaz de combustion soient soumis à une turbulence, généralement provoquée dans une préchambre ou par une forme appropriée de la chambre de combustion.

Dans un générateur à pistons libres, la chambre de combustion comprend essentiellement l'espace compris entre les deux pistons, dont la face active, c'est-à-dire la face qui délimite cette chambre, est usuellement plate. Cet espace, qui est minimal quand les pistons atteignent leur point mort intérieur, ne peut être réduit à une valeur très faible car l'écart entre les pistons doit être suffisant pour que ceux-ci ne recouvrent jamais, même partiellement, ledit orifice où débouche l'injecteur ou la préchambre, en tenant compte du fait que la course des pistons n'est pas déterminée positivement et que, par suite, leur position de point mort intérieur varie légèrement d'un cycle à l'autre.

Il est connu (FR-A-1228290) de prévoir dans la région centrale de la face active des pistons une préchambre ou une cavité afin de favoriser la turbulence. Cependant, ceci a pour conséquence, toutes choses égales par ailleurs, une diminution dudit écart minimal entre les pistons et augmente donc le risque de recouvrement dudit orifice par les pistons.

L'invention a pour but de réaliser un générateur à pistons libres à haut rendement procuré par une forte turbulence des gaz de combustion, sans risque de recouvrement partiel par les pistons de l'orifice d'injection du carburant ou des gaz de combustion.

A cet effet, l'invention a pour objet un générateur du genre susmentionné, caractérisé en ce que la face active de chaque piston est de forme générale plate et est munie d'un évidement débouchant sur une région de la périphérie du piston, et en ce que des moyens de guidage empêchant la rotation de chaque piston maintiennent cette région centrée sur la même génératrice du cylindre que l'orifice par lequel débouche la préchambre ou l'injecteur, le volume de l'évidement étant suffisamment faible pour qu'à leur point mort intérieur les pistons ne se heurtent pas.

Dans un premier mode de réalisation, l'évidement a une forme générale ovale et, de préférence, cet évidement présente, à partir de ladite région, une profondeur croissante puis décroissante jusqu'au voisinage du centre du piston.

En variante, l'évidement peut être constitué par une saignée radiale de profondeur décroissante à partir de ladite région, ou encore par une saignée radiale reliant cette région à une zone creuse entourant le centre du piston, la saignée et la zone creuse ayant de préférence la même profondeur constante.

Deux exemples de réalisation d'un générateur à pistons libres selon l'invention sont décrits ci-après, avec référence aux dessins annexés parmi lesquels:

Fig. 1 est une vue partielle en coupe axiale du générateur selon un premier mode de réalisation;

Fig. 2 est une vue en coupe prise suivant la ligne 2–2 de la fig. 1;

Fig. 3 est une vue partielle en coupe axiale d'un générateur suivant un second mode de réalisation, prise suivant la ligne 3–3 de la fig. 4; et

Fig. 4 est une vue prise en coupe suivant la ligne 4–4 de la fig. 3.

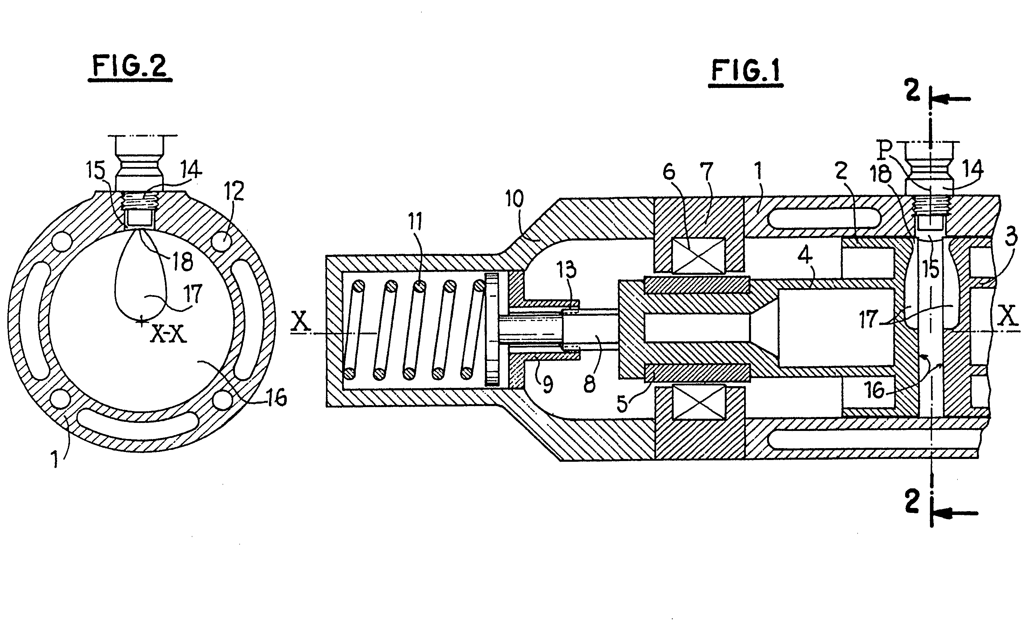

On voit sur la fig. 1 une partie d'un générateur thermomagnétique à combustion interne comprenant, dans un cylindre 1 d'axe X–X, deux pistons libres opposés 2, 3. Une moitié seulement du générateur est montrée entièrement, sans toutefois ses dispositifs d'admission et d'échappement, qui sont classiques et ont été omis pour plus de clarté; l'autre moitié du générateur est symétrique de la première par rapport au plan transversal P suivant lequel est effectuée le coupe 2–2.

Chaque piston comporte une tige 4 portant une masse magnétique 5 qui constitue le noyau mobile d'une bobine 6 de production de courant électrique portée par un bloc magnétique 7 solidaire du cylindre. Chaque tige 4 est prolongée par un embout cylindrique 8 qui coulisse, coaxialement au cylindre 1, dans un guide 9. Ce dernier est solidaire d'une pièce de fond 10 en forme de cuvette délimitant, du côté du guide opposé au piston, une chambre contenant un organe élastique tel qu'un ressort 11 qui pousse axialement l'embout 8 et tend à repousser le piston dans le cylindre, vers l'autre piston.

Chaque pièce de fond 10 est appliquée contre le cylindre 1, par l'intermédiaire du bloc magnétique 7, au moyen de tirants non représentés traversant le cylindre, le bloc et la pièce de fond par des trous alignés 12 (fig. 2).

Le coulissement de l'embout 8 dans le guide 9 est assuré par des moyens de guidage, tels que des cannelures 13 conjuguées, qui empêchent toute rotation des pistons 2, 3 par rapport au cylindre 1 autour de l'axe X–X.

Dans le mode de réalisation des fig. 1 et 2, un injecteur de carburant 14 fixé au cylindre 1 débouche radialement dans l'alésage de ce cylindre par un orifice 15 situé entre les deux pistons 2, 3 dans le plan P. Ces pistons ont une face active 16 qui est plate dans sa majeure partie mais est creusée d'un évidement 17 de forme à peu près ovale qui débouche par une extrémité 18 sur la périphérie du piston; la largeur et la profondeur de l'évidement croissent à partir de cette extrémité en s'approchant du centre de la face du piston, puis décroissent jusqu'au voisinage de ce centre, où elles s'annulent.

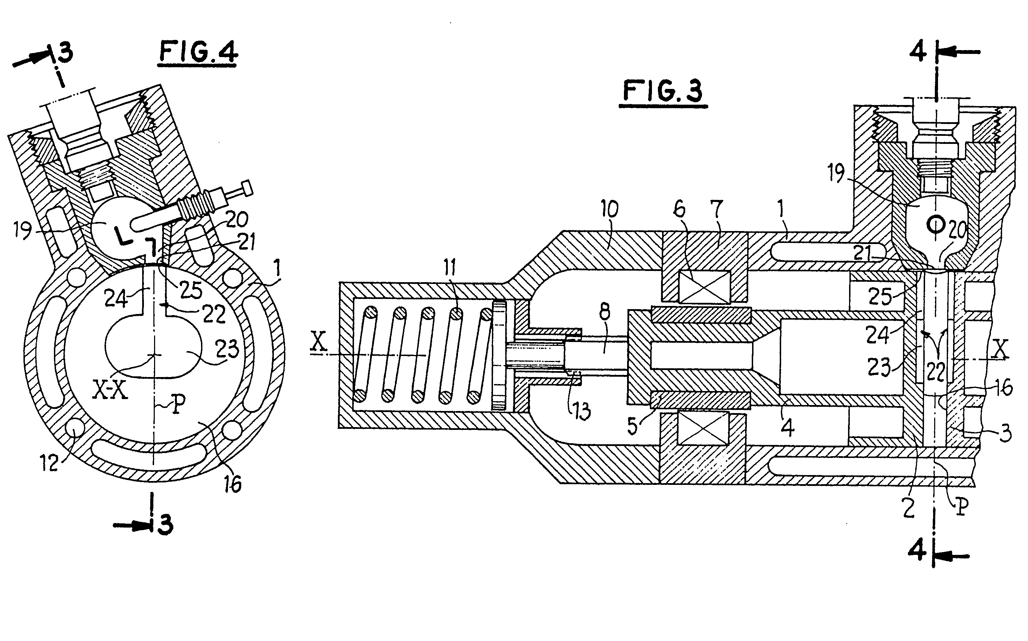

Dans le mode de réalisation des fig. 3 et 4, une préchambre de turbulence et de combustion 19 est montée dans le corps du cylindre 1 et présente un canal de sortie 20 qui débouche dans l'alésage de ce cylindre par un orifice 21 situé dans le plan P, entre les deux pistons 2, 3. Ceux-ci ont une face active qui est plate dans sa majeure partie mais est creusée d'un évidement 22 de faible épaisseur sensiblement constante; cet évidement comprend une partie large arrondie 23 s'étendant au voisinage du centre de la face du piston et prolongée par une saignée radiale étroite 24 qui débouche par une extrémité 25 sur la périphérie du piston. L'axe X–X traverse la partie large 23.

Dans les deux modes de réalisation, surtout dans celui comportant une préchambre, le volume de l'évidement 17, 22 est suffisamment faible pour qu'à leur point mort intérieur les pistons ne se heurtent pas. Dans les deux cas, les moyens de guidage 13 empêchent la rotation du piston par rapport au cylindre 1 et sont aménagés de manière que l'extrémité 18, 25 de l'évidement soit maintenue centrée sur la même génératrice de l'alésage du cylindre que l'orifice 15, 21. Ainsi, lorsque les pistons sont à leur point mort intérieur, même très rapprochés, ils ne recouvrent pas, même partiellement, l'orifice 15, 21, grâce à l'échancrure que forme sur leur périphérie l'extrémité 18, 25 de l'évidement 17, 22.

De plus, l'évidement 17, 22 optimise la combustion du mélange de gaz et de carburant lorsque les deux postions atteignent leur point mort intérieur: dans le premier cas (fig. 1 et 2), le carburant injecté est dirigé vers le centre du cylindre, où les gaz sont turbulents grâce à la forme évidée de la face active du piston; dans le second cas (fig. 3 et 4), le mélange turbulent de carburant et de gaz sortant de la préchambre 19 et introduit dans le cylindre est dirigé vers le centre du cylindre, de sorte que la combustion provoque une poussée bien centrée sur la face de chaque piston.

En variante, d'autres formes peuvent être données à l'évidement creusé dans la face active des pistons. Il peut par exemple se limiter à une simple saignée radiale dont la profondeur diminue à partir d'une extrémité, telle que 18, située sur la périphérie du piston.

## Revendications

1. Générateur à combustion interne, du type comprenant deux pistons libres (2, 3) opposés dans un même cylindre (1) au milieu duquel débouche soit un injecteur de carburant (14), soit une préchambre (19) de combustion et de turbulence, par un orifice (15; 21) situé entre les deux pistons dans leur position dans laquelle ils sont le plus rapprochés, caractérisé en ce que la face active (16) de chaque piston est de forme générale plate et munie d'un évidement (17; 22) débouchant sur une région (18; 25) de la périphérie du piston, et en ce que des moyens de guidage (13) empêchant la rotaiton de chaque piston maintiennent cette région centrée sur la même génératrice du cylindre (1) que l'orifice (15; 21) par lequel débouche la préchambre (19) ou l'injecteur (14), le volume de l'évidement (17, 22) étant suffisamment faible pour qu'à leur point mort intérieur les pistons (2, 3) ne se heurtent pas.

2. Générateur suivant la revendication 1, caractérisé en ce que l'évidement (17) a une forme générale ovale.

3. Générateur suivant la revendication 2, caractérisé en ce que l'évidement (17) présente, à partir de la région (18), une largeur croissante puis décroissante jusqu'au voisinage du centre du piston (2, 3).

4. Générateur suivant la revendication 1, caractérisé en ce que l'évidement (22) a une profondeur constante.

5. Générateur suivant la revendication 1, caractérisé en ce que l'évidement est constitué d'une saignée radiale de profondeur décroissante à partir de ladite région.

6. Générateur suivant l'une quelconque des revendications 1 à 5, caractérisé en ce que les moyens de guidage (13) sont constitués par une liaison cannelée entre la tige (4, 8) de chaque piston (2, 3) et un organe de guidage (9) solidaire du cylindre (1).

## Patentansprüche

1. Brennkraftgenerator der Bauform, die zwei Freikolben (2, 3) aufweist, die in einem gemeinsamen Zylinder (1) gegenüberliegen, in den entweder eine Brennstoffeinspritzung (14) oder eine Vorkammer (19) für die Verbrennung und Turbulenz über eine Öffnung (15; 21) einmündet, die zwischen den beiden Kolben der Position derselben angeordnet ist, in der sie sich am stärksten annähern, dadurch gekennzeichnet, dass die aktive Fläche (16) jedes Kolbens im allgemeinen eben ausgebildet ist und mit einer Aussparung (17; 22) versehen ist, die an einem Bereich (18; 25) des Umfangs des Kolbens mündet, und dass Führungseinrichtungen (13), die die Drehung jedes Kolbens verhindern, diesen Bereich auf derselben Erzeugenden des Zylinders (1) zentriert halten, an der die Öffnung (15; 21) vorgesehen ist, durch die Vorkammer (19) oder die Einspritzeinrichtung (14) einmündet, und dass das Volumen der Aussparung (17; 22) so ausreichend gering ist, dass die Kolben (2, 3) in ihrem unteren Totpunkt nicht anstossen.

2. Brennkraftgenerator nach Anspruch 1, dadurch gekennzeichnet, dass die Aussparung (17) im allgemeinen die Form eines Ovals hat.

3. Brennkraftgenerator nach Anspruch 2, dadurch gekennzeichnet, dass die Aussparung (17), ausgehend von dem Bereich (18), eine zunehmende Grösse und dann bis zur Nähe der Mitte des Kolbens (2, 3) eine abnehmende Grösse hat.

4. Brennkraftgenerator nach Anspruch 1, dadurch gekennzeichnet, dass die Aussparung (22) eine konstante Tiefe hat.

5. Brennkraftgenerator nach Anspruch 1, dadurch gekennzeichnet, dass die Aussparung von einem radialen Zapfen gebildet wird, dessen Tiefe, ausgehend von dem Bereich, abnimmt.

6. Brennkraftgenerator nach einem der Ansprüche 1 bis 5, dadurch gekennzeichnet, dass die Führungseinrichtungen (13) von einer genuteten Verbindung zwischen der Kolbenstange (4, 8) jedes Kolbens (2, 3) und einem Führungsglied (9) gebildet wird, das mit dem Zylinder (1) ein Stück bildet.

**Claims**

1. An internal combustion generator, of the type comprising two opposed free pistons (2, 3) in a common cylinder (1) with the middle of which communicates either a fuel jet (14) or a combustion and turbulence pre-chamber (19), through a port (15; 21) located between the two pistons in the position in which they are the closest together, characterised in that the active face (16) of each piston has a generally flat shape and provided with a cavity (17; 22) opening onto a region (18; 25) of the periphery of the piston, and guide means (13) preventing the rotation of each piston maintain this region centered on the same generatrix of the cylinder (1) as the port (15; 21) providing the communication with the pre-chamber (19) or the jet (14), the volume of the cavity (17, 32) being small enough to ensure that the pistons (2, 3) do not collide with each other in their inner dead-centre position.

2. A generator according to claim 1, characterised in that the cavity (17) has a generally oval shape.

3. A generator according to claim 2, characterised in that the cavity (17) has, starting in the region (18), a width which increases and then decreases to the vicinity of the centre of the piston (2, 3).

4. A generator according to claim 1, characterised in that the cavity (22) has a constant depth.

5. A generator according to claim 1, characterised in that the cavity is formed by a radial recessing of decreasing depth starting in said region.

6. A generator according to any one of the claims 1 to 5, characterised in that the guide means (13) are formed by a splined connection between the rod (4, 8) of each piston (2, 3) and a guide element (9) rigid with the cylinder (1).

FIG.2

FIG.1

FIG.4

FIG.3